# EUROPEAN PATENT APPLICATION

(11) **EP 4 764 793 A1**
(43) Date of publication of application: **24.06.2026**
(21) Application number: 25222329.2
(22) Date of filing: 10.12.2025
(51) Int. Cl.: G06F 3/01, G02B 27/01

(54) **IMAGE PROCESSING APPARATUS, IMAGE PROCESSING METHOD, AND PROGRAM**

(30) Priority: 17.12.2024 JP 2024220778
(71) Applicant: Canon Kabushiki Kaisha, Tokyo, 146-8501 (JP)
(72) Inventor: TANAE, Mamoru, Tokyo, 146-8501 (JP)
(74) Representative: Canon Europe Limited

(57) **Abstract**

The present disclosure is directed to providing assistance that may improve a user's work efficiency. An image processing apparatus according to the present disclosure is an image processing apparatus for performing display control on a display unit included in a wearable device, such as a head-mounted display, and obtains specific text from text associated with a moving image, and performs display control to display the specific text and the moving image on different display windows.

## Description

### TECHNICAL FIELD

The present disclosure relates to a display control technology for a wearable device.

### BACKGROUND

There has been a technology that visually assists a task being performed by the wearer of a wearable device such as a head-mounted display (hereinafter referred to as "user") by displaying a moving image related to the task on the display unit of the wearable device. Japanese Patent Laid-Open No. 2016-218306 discloses a technology in which a captured image obtained by image capturing by an image capturing apparatus included in a head-mounted display is analyzed to detect a target object included as a representation in the captured image, and a moving image related to a task associated with the detected target object is displayed on a display unit.

### SUMMARY

Conventionally, the technology sufficiently improves work efficiency to an extent desired at that time. However, in recent years, there has been a demand for a system that assists further improvement in work efficiency.

The present disclosure in its first aspect provides image processing apparatuses as specified in claims 1 to 9.

The present disclosure in its second aspect provides an image processing method apparatus as specified in claim 10.

The present disclosure in its third aspect provides a program as specified in claim 11.

According to the technology of the present disclosure, it may provide assistance that may improve a user's work efficiency.

Features of the present disclosure will become apparent from the following description of embodiments with reference to the attached drawings. The following description of embodiments is described by way of example.

### BRIEF DESCRIPTION OF THE DRAWINGS

Fig. 1 is a block diagram illustrating an example of a hardware configuration of a head-mounted display according to Embodiment 1;
Fig. 2 is a block diagram illustrating an example of a logical configuration of an image processing unit according to Embodiment 1;
Fig. 3 is a diagram illustrating a display example of a common moving image viewing website;
Fig. 4 is a diagram for describing an example of a method by which a text obtaining unit selects a mode according to Embodiment 1;
Fig. 5 is a diagram for describing an example of a method by which the text obtaining unit extracts specific text according to Embodiment 1;
Fig. 6 is a diagram for describing an example of the specific text obtained by the text obtaining unit according to Embodiment 1;
Fig. 7 is a diagram illustrating an example of a display screen displayed on a display unit of the head-mounted display according to Embodiment 1;
Fig. 8 is a flowchart illustrating an example of a flow of processing by the image processing unit according to Embodiment 1;
Fig. 9 is a flowchart illustrating an example of a flow of processing by an image processing unit according to Embodiment 2;
Fig. 10 is a diagram illustrating an example of the arrangement of candidate positions according to Embodiment 3; and
Fig. 11 is a flowchart illustrating an example of a flow of processing by an image processing unit according to Embodiment 3.

### DESCRIPTION OF THE EMBODIMENTS

Hereinafter, with reference to the attached drawings, the present disclosure is explained in detail in accordance with preferred embodiments. Configurations shown in the following embodiments are merely exemplary and the present disclosure is not limited to the configurations shown schematically. Each of the embodiments of the present invention described below can be implemented solely or as a combination of a plurality of the embodiments or features thereof where necessary or where the combination of elements or features from individual embodiments in a single embodiment is beneficial.

Note that the following embodiments will be described taking a video pass-through or optical see-through head-mounted display as an example, but the scope of the technology of the present disclosure is not limited to head-mounted displays. The technology of the present disclosure is applicable to wearable display devices having display units (wearable devices) such as augmented reality (AR) glasses (also called "smart glasses"), for example.

### [Embodiment 1]

### <Hardware Configuration of Head-mounted Display>

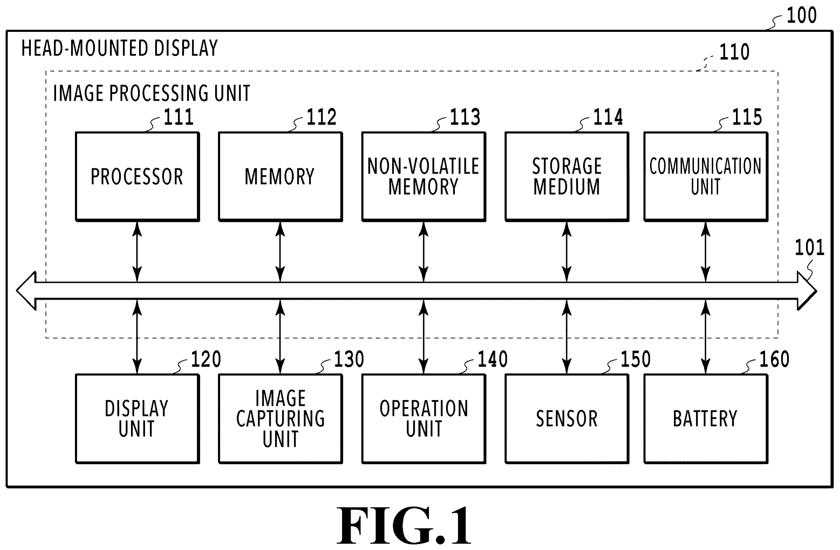

A head-mounted display 100 according to Embodiment 1 will be described with reference to Figs. 1 to 8. Fig. 1 is a block diagram illustrating an example of a hardware configuration of the head-mounted display 100 according to Embodiment 1. The head-mounted display 100 has a processor 111, a memory 112, a non-volatile memory 113, a storage medium 114, a communication unit 115, a display unit 120, an image capturing unit 130, an operation unit 140, a sensor 150, and a battery 160 as its hardware configuration. The following description will be given on the assumption that the processor 111, the memory 112, the non-volatile memory 113, the storage medium 114, and the communication unit 115 form an image processing unit 110. The elements included in the head-mounted display 100 as its hardware configuration are communicatively connected to one another through a bus 101.

The processor 111 includes an arithmetic processing device, such as a central processing unit (CPU) or a graphics processing unit (GPU), and comprehensively controls the head-mounted display 100. The memory 112 includes a random access memory (RAM) or the like and operates as a work area for the processor 111. The non-volatile memory 113 includes a read only memory (ROM) or the like and stores computer programs for controlling the head-mounted display 100 and various pieces of data to be used to execute the computer programs. Hereinafter, "computer program" will be referred to simply as "program." The storage medium 114 includes a flash memory, a hard disk drive, or the like and stores the above-mentioned programs, various pieces of data to be used to execute the programs, and other pieces of data such as image data and audio data. The communication unit 115 is a communication interface to be used to transmit and receive data to and from external apparatuses. The communication unit 115 has a communication antenna in a case where the communication unit 115 communicates with external apparatuses via wireless communication.

The display unit 120 includes a display device, such as a liquid crystal display, and, based on a signal output from the image processing unit 110 which represents a display image, displays that display image. Specifically, the display unit 120 is disposed to be present within the user's view in a state where the user wears the head-mounted display 100. The image capturing unit 130 includes an image sensor, such as a charge coupled device (CCD) or a complementary metal-oxide-semiconductor (CMOS) sensor, and an optical system, such as a lens, and so on. The image capturing unit 130 focuses an external ray on the light receiving surface of the image sensor through the optical system, converts the representation obtained by the focusing into an electrical signal by photoelectric conversion, and outputs this electrical signal. Specifically, the image capturing unit 130 is disposed at such a position and in such an orientation as to be able to capture images in a direction corresponding to the direction of the user's view in the state where the user wears the head-mounted display 100.

The operation unit 140 includes push button switches, touch sensors, or the like, and receives operations from the user (hereinafter referred to as "user operations") and outputs electrical signals corresponding to the user operations. The sensor 150 detects the position and orientation of the head-mounted display 100. For example, the sensor 150 includes a gyro sensor, an acceleration sensor, a global navigation satellite system (GNSS) receiver, such as a global positioning system (GPS) receiver, or the like. The battery 160 includes a rechargeable battery, such as a lithium-ion battery, and supplies electric power to the elements included in the head-mounted display 100 as its hardware configuration through the bus 101.

The processor 111 controls the head-mounted display 100 by loading programs read out of the non-volatile memory 113 or the storage medium 114 or received via communication by the communication unit 115 to the memory 112 and executing them. Also, the processor 111 operates as a control unit that controls each of the display unit 120, the image capturing unit 130, the operation unit 140, the sensor 150, and the battery 160.

### <Logical Configuration of Image Processing Unit>

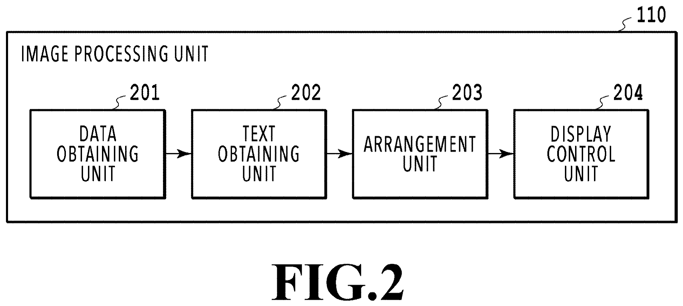

Fig. 2 is a block diagram illustrating an example of a logical configuration of the image processing unit 110 in the head-mounted display 100 according to Embodiment 1. The image processing unit 110 has a data obtaining unit 201, a text obtaining unit 202, an arrangement unit 203, and a display control unit 204 as its logical configuration. The processor 111 implements the elements included in the image processing unit 110 as its logical configuration by loading programs read out of the non-volatile memory 113 or the storage medium 114 or received via communication by the communication unit 115 to the memory 112 and executing them.

The data obtaining unit 201 obtains data of a moving image (hereinafter referred to as "moving image data"). Specifically, the data obtaining unit 201 reads out data of a moving image selected by a user operation from the storage medium 114 to obtain the moving image data, or receives it via communication by the communication unit 115 to obtain the moving image data. For example, the user inputs a keyword or the like using the operation unit 140. Note that the keyword input method is not limited to the method using the operation unit 140. For example, the keyword may be input by analyzing the user's uttered voice collected by a sound collector not illustrated in Fig. 1, such as a microphone, and transcribing it into text, i.e., voice input. Also, the keyword may be input by an operation on a terminal not illustrated in Fig. 1, such as a smartphone. The data obtaining unit 201 searches for moving images matching the keyword, and obtains data of thumbnails representing a plurality of moving images meeting the search criteria. The thumbnails obtained by the data obtaining unit 201 are displayed on the display unit 120 in accordance with display control by the display control unit 204 to be described later. Using the operation unit 140, for example, the user selects a desired thumbnail from among the thumbnails displayed in the display unit 120. The data obtaining unit 201 obtains the data of the moving image corresponding to the thumbnail selected by the user operation.

The text obtaining unit 202 obtains data of a specific piece of text (hereinafter referred to as "specific text") from text associated with the moving image data obtained by the data obtaining unit 201 (hereinafter referred to as "associated text"). Specifically, for example, the text obtaining unit 202 obtains the specific text by extracting it from the associated text based on a mode selected from among a plurality of modes by a user operation (hereinafter referred to as "selected mode"). More specifically, for example, the text obtaining unit 202 obtains the specific text based on the selected mode by extracting text indicating at least one of a material, a tool, and a process corresponding to the selected mode from the associated text. For example, in a case where the selected mode is a mode for "cooking," the text obtaining unit 202 obtains the specific text by extracting text indicating at least one of the ingredients to be used in cooking and the process for the cooking from the associated text.

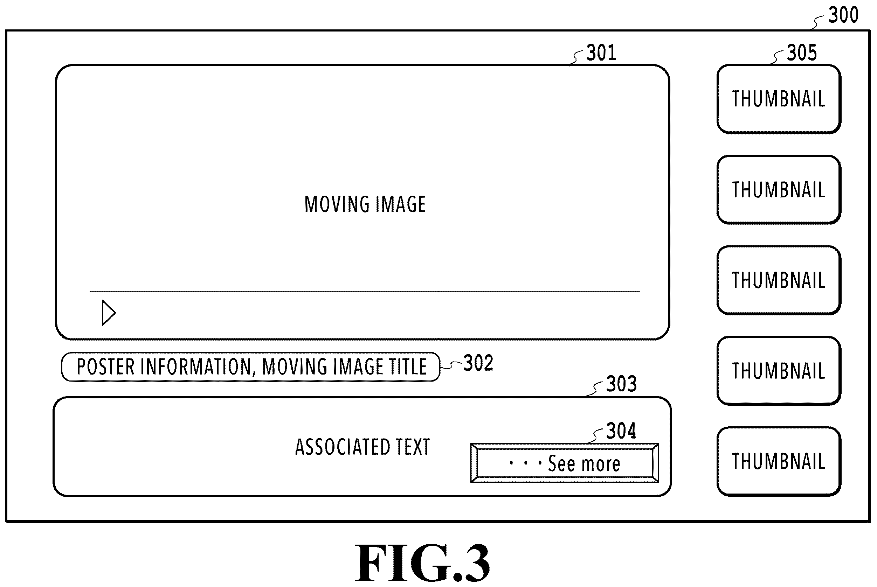

A general method of displaying a moving image and associated text, a method of selecting a mode, a method of extracting text based on a selected mode, and a specific example of specific text will be described with reference to Figs. 3 to 6. Fig. 3 is a diagram illustrating a display example of a common moving image viewing website. As illustrated in Fig. 3 as an example, a display screen 300 of the moving image viewing website includes the following regions, for example. Specifically, the display screen 300 includes a region 301 in which to display a currently viewed moving image, and a region 302 in which to display information on the person who posted the currently viewed moving image and the title of the moving image. Also, the display screen 300 includes a region 303 in which to display the associated text for the currently viewed moving image, and regions 305 in which to display thumbnails of moving images related to the currently viewed moving image. In a case where the associated text contains a large number of characters compared to the size of the region 303, the region 303 displays part of the associated text, such as a predetermine number of lines from the head of the associated text. In this case, the entire associated text may be displayed through scrolling or the like by pressing a button 304.

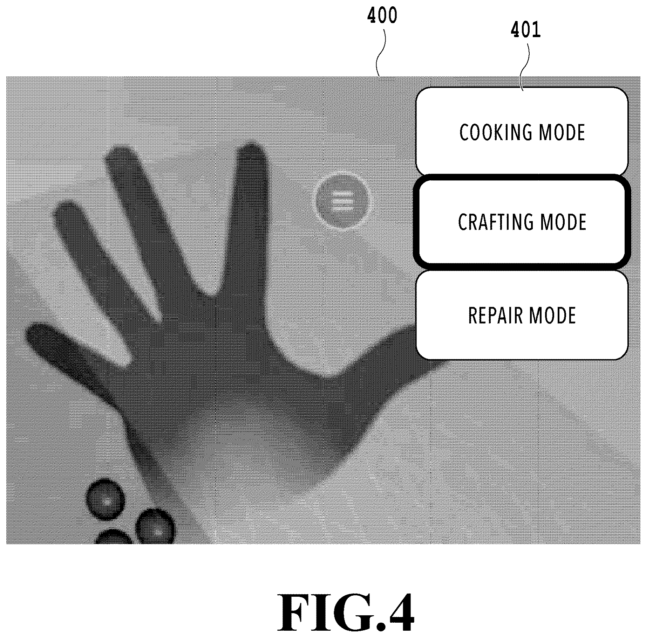

Fig. 4 is a diagram for describing an example of a method by which the text obtaining unit 202 selects a mode according to Embodiment 1. The user makes a gesture with their hand, fingers, or the like within the angle of view of the image capturing unit 130. The image capturing unit 130 captures an image of the user's gesture, and the text obtaining unit 202 obtains data of the captured image obtained by the image capturing by the image capturing unit 130. Fig. 4 illustrates an example of a captured image 400. The text obtaining unit 202 analyzes the obtained captured image to specify the gesture included as a representation in the captured image, and selects a mode corresponding to the specified gesture.

Examples of the gesture include the following, for example. The user makes, for example, a gesture in which the user brings the tips of the forefinger and thumb of the right hand into contact with each other with the palm facing the image capturing unit 130. In a case where the image capturing unit 130 captures an image of such a gesture, the text obtaining unit 202 instructs the display control unit 204 to list a plurality of modes prepared in advance. Fig. 4 illustrates an example of a mode list 401. For example, in a case where the user moves up or down the tips of the forefinger and thumb of the right hand in the state where the fingertips are in contact with each other, the focused mode is switched. The focused mode is, for example, highlighted to be distinguishable from the other modes in the mode list, for example. In a case where the user, for example, brings the tips of the forefinger and thumb of the right hand out of contact with each other, the focused mode is determined to be a selected mode. Also, in a case where, for example, the user twists the wrist of the right hand with the tips of the forefinger and thumb in contact with each other to hide the palm of the right hand, the display of the list is canceled.

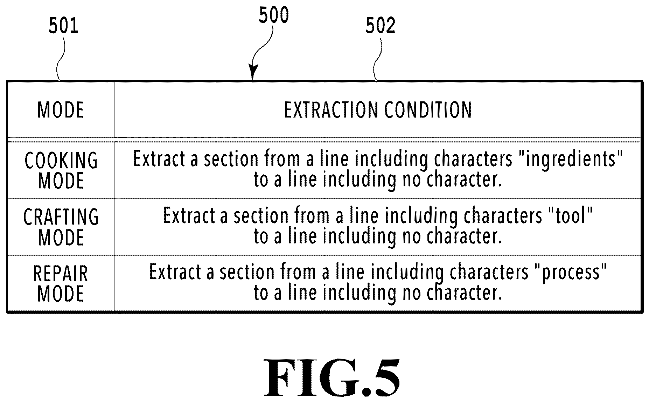

Fig. 5 is a diagram for describing an example of a method by which the text obtaining unit 202 extracts specific text according to Embodiment 1. In a table 500 illustrated in Fig. 5, modes 501 and extraction conditions 502 are associated with each other, for example. The text obtaining unit 202 obtains specific text by extracting text from associated text based on the extraction condition associated with the selected mode in the table 500. For example, in a case where the selected mode is a cooking mode, the text obtaining unit 202 extracts the text in a section of the associated text from a line including the characters "ingredients" to a line including no character, and obtains this text as the specific text. Note that the characters are not limited to "ingredients," and the text obtaining unit 202 may extract, for example, the text in a section from a line including characters such as "recipe" to a line including no character. The characters for specifying the section to be extracted are not limited to particular characters. Also, a plurality of modes may share the same characters for specifying the section to be extracted.

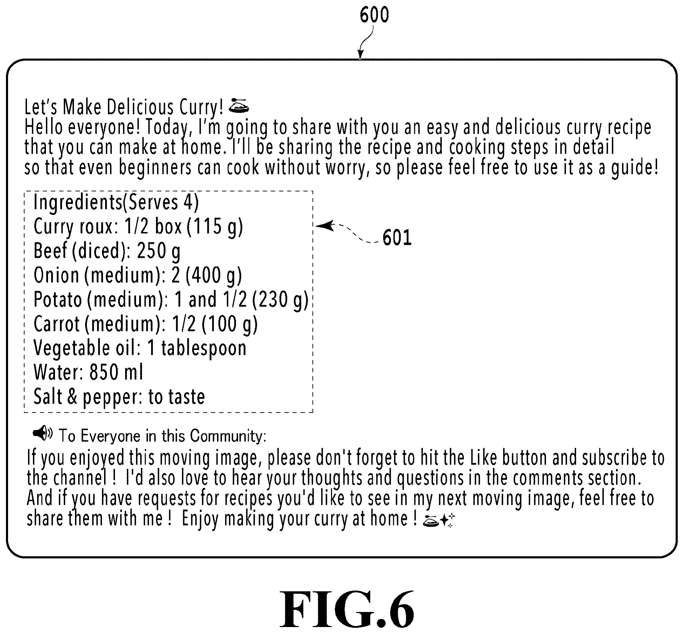

Fig. 6 is a diagram for describing an example of the specific text obtained by the text obtaining unit 202 according to Embodiment 1. Fig. 6 illustrates an example of associated text 600 and specific text 601 to be extracted from the associated text 600. Note that the extraction conditions are not limited to those listed in the table 500. For example, in a case of extracting text related to "ingredients" from the associated text, the text obtaining unit 202 may extract a line including a numerical value or a character or character strings indicating the unit of a numerical value as specific text. A character or character string indicating the unit of a numerical value is "gram," "g," "kg," "liter," "l,' "ml," "a piece of," "a stick of," or the like. Also, in this case, for example, the text obtaining unit 202 may exclude lines with numerical values expressed with units indicating time, such as "hours," "minutes," or "seconds," from the extraction. Also, in this case, for example, if the number of characters included in a line exceeds a predetermined number, the text obtaining unit 202 may exclude this line from the extraction on the assumption that this line includes information other than information related to the ingredients, such as a description of the cooking process.

The method by which the text obtaining unit 202 extracts specific text is not limited to the method based on the extraction condition 502 associated with a mode 501 listed as an example in the table 500. For example, the text obtaining unit 202 may input the associated text into a generative artificial intelligence (AI) prepared in advance, and obtain the resulting text output by the generative AI as the specific text. Also, the text obtaining unit 202 may transcribe a caption included in frames forming the moving image into text by optical character recognition, and extract text corresponding to the specific text from the character strings in the transcribed text. For example, in this case, the text obtaining unit 202 obtains the frame corresponding to a timestamp designated by the person who posted the moving image or the user, and performs optical character recognition on the obtained frame to transcribe the caption included in the frame into text.

The arrangement unit 203 arranges a first display window to display the moving image obtained by the data obtaining unit 201 and a second display window to display the specific text obtained by the text obtaining unit 202. The method by which the arrangement unit 203 arranges the first and second display windows will be described later.

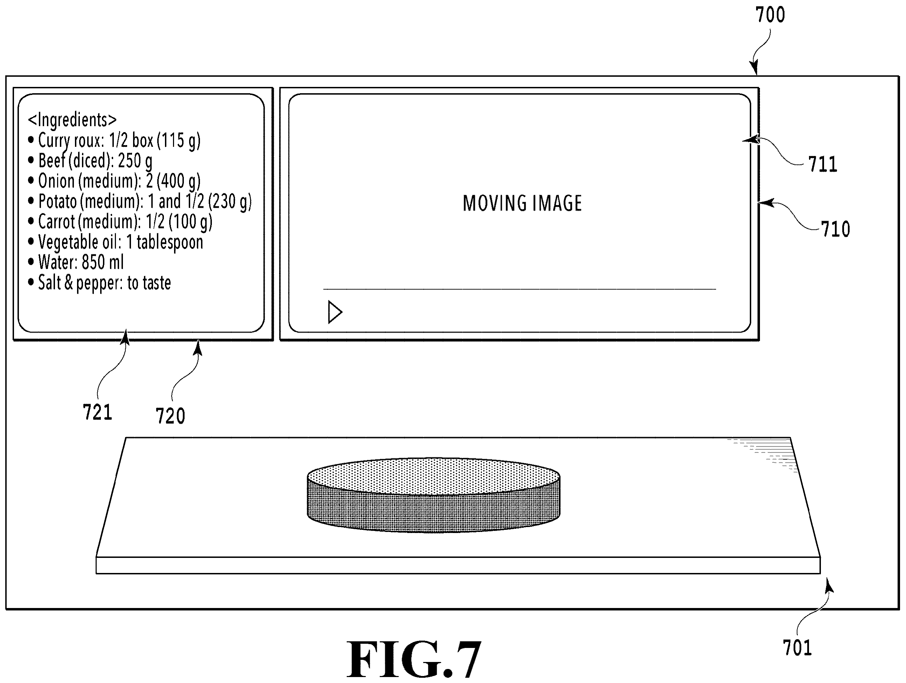

The display control unit 204 displays a display image including the moving image obtained by the data obtaining unit 201 and the specific text obtained by the text obtaining unit 202 on the display unit 120 by performing display control on the moving image and the specific text such that they are displayed on different display windows. Fig. 7 is a diagram illustrating an example of a display screen 700 displayed on the display unit 120 of the head-mounted display 100 according to Embodiment 1. The display screen 700 includes a moving image 711 controlled to be displayed in a first display window 710, a representation 721 of the specific text controlled to be displayed in a second display window 720, and a video pass-through or optical see-through representation 701.

For example, the first display window 710 and the second display window 720 are arranged and fixed at, for example, predetermined positions on the display screen 700. The positions on the display screen 700 at which to fix the first display window 710 and the second display window 720 may be determined in advance or designated by a user operation. As illustrated in Fig. 7 as an example, the first display window 710 is arranged at, for example, an upper center portion of the user's view, and the second display window 720 is arranged at, for example, an upper left or upper right portion of the user's view. Such an arrangement enables the user to prepare the ingredients or tools needed in cooking or the materials or tools needed in a task while checking the representation 721 of the specific text, and also proceed with the task while checking the moving image 711 and the video pass-through or optical see-through representation 701.

Note that the image processing unit 110 may accept a user operation for changing the position of at least one of the first display window 710 and the second display window 720 in the state where the moving image and the specific text are displayed. For example, by using the operation unit 140 or inputting a gesture, the user selects the first or second display window whose position is to be changed, and moves the selected display window to a desired position. In a case where the image processing unit 110 accepts this user operation, the arrangement unit 203 moves the selected display window over the display screen 700 based on the user operation. The display control unit 204 performs display control such that the moving image or the specific text is displayed in the moved display window. A configuration as above enables the user performing a task to maintain a visual field that may improve the work efficiency in a manner suitable for the task.

Note that the display control unit 204 may perform display control such that at least one of the moving image 711 controlled to be displayed in the first display window 710 and the specific text controlled to be displayed in the second display window 720 is translucently displayed. Translucently displaying the moving image 711 and the specific text allows the background behind the first and second display windows to be seen through them, and thus widens the user's visual field. Also, the display control unit 204 may perform display control such that, as the process progresses, the character strings corresponding to ingredients that have already been used are deleted from the specific text or struck through, grayed out, or subjected to a similar operation to clearly indicate that they have been already used. The progress of the process may be specified by, for example, sequentially analyzing the frames of the moving image that have been played so far or sequentially analyzing the captured image obtained by the image capturing by the image capturing unit 130.

### <Operation of Image Processing Unit>

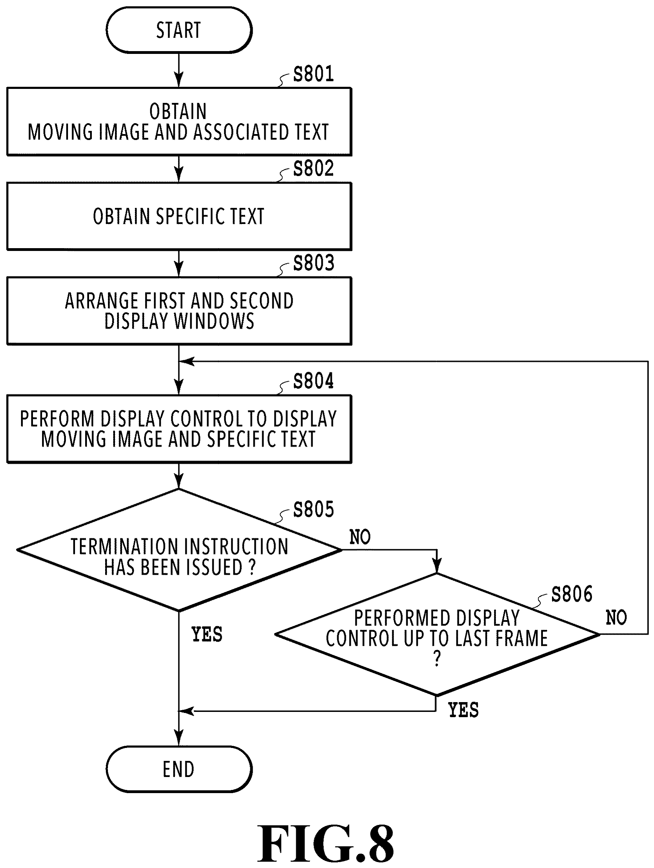

Operation of the image processing unit 110 will be described with reference to Fig. 8. Fig. 8 is a flowchart illustrating an example of a flow of processing by the image processing unit 110 according to Embodiment 1. The processor 111 implements the processing of the flowchart illustrated in Fig. 8 by reading out a program stored in the non-volatile memory 113, the storage medium 114, or the like into the memory 112 and executing it. Note that the flowchart illustrated in Fig. 8 is started, for example, in a case where the user powers on the head-mounted display. Also, each symbol "S" prefixed to a reference number in the following description means a process step.

First, in S801, the data obtaining unit 201 obtains the data of a moving image and the data of associated text corresponding to the moving image. The method of selecting the moving image to be obtained has been described above, and description thereof will therefore be omitted. Next, in S802, the text obtaining unit 202 obtains the data of specific text from the associated text obtained in S801. The method of obtaining the specific text, specifically, the method of extracting text corresponding the specific text from the associated text, as well as the method of selecting a mode, has been described above and description thereof will therefore be omitted. Next, in S803, the arrangement unit 203 arranges the first display window on which to play the moving image obtain in S801 and the second display window on which to display a representation of the specific text obtained in S802. The method of determining the positions at which to arrange the first and second display windows has been described above, and description thereof will therefore be omitted.

Next, in S804, the display control unit 204 performs display control to display a display image including the moving image obtained in S801 and the specific text obtained in S802 by performing display control on the moving image and the specific text such that the moving image is displayed in the first display window and the specific text is displayed in the second display window. The method by which the display control unit 204 performs the display control has been described above, and description thereof will therefore be omitted. Next, in S805, the image processing unit 110 judges whether a termination instruction has been issued by a user operation. If it is judged in S805 that a termination instruction has been issued, the image processing unit 110 terminates the processing of the flowchart illustrated in Fig. 8.

If it is judged in S805 that no termination instruction has been issued, then in S806, the display control unit 204 judges whether display control has been performed on the moving image obtained in S801 up to the last frame. If it is judged in S806 that display control has not been performed up to the last frame, the image processing unit 110 returns to S804 and repeats the processes from S804 to S806 until the following judgment is made. Specifically, the image processing unit 110 repeats the processes from S804 to S806 until it is judged in S805 that a termination instruction has been issued or until it is judged in S806 that display control has been performed up to the last frame. If it is judged in S806 that display control has been performed up to the last frame, the image processing unit 110 terminates the processing of the flowchart illustrated in Fig. 8.

The head-mounted display 100 configured as described above may provide assistance that may improve the user's work efficiency.

### [Embodiment 2]

In Embodiment 1, a description has been given of an aspect in which a first display window on which to play a moving image and a second display window on which to display a representation of specific text are fixed and arranged at different positions on a display screen. In Embodiment 2, a description will be given of an aspect in which the first display window is arranged at a predetermined position within a virtual space corresponding to the real space.

The hardware configuration of the head-mounted display according to Embodiment 2 is the same as the hardware configuration of the head-mounted display 100 according to Embodiment 1 illustrated as an example in Fig. 1. Thus, the following description will be given with the head-mounted display according to Embodiment 2 referred to as "head-mounted display 100." Also, the elements included in the image processing unit 110 according to Embodiment 2 as its logical configuration are similar to the elements included in the image processing unit 110 according to Embodiment 1 as its logical configuration illustrated as an example in Fig. 2 except that some elements have different functions. Thus, in the following, the names of the elements included in the image processing unit 110 according to Embodiment 2 as its logical configuration are denoted based on the names of the elements included in the image processing unit 110 according to Embodiment 1 as its logical configuration. Specifically, the image processing unit 110 according to Embodiment 2 (hereinafter referred to simply as "image processing unit 110") has a data obtaining unit 201, a text obtaining unit 202, an arrangement unit 203, and a display control unit 204 according to Embodiment 2 as its logical configuration.

The data obtaining unit 201 and the text obtaining unit 202 according to Embodiment 2 (hereinafter referred to simply as "data obtaining unit 201" and "text obtaining unit 202") are similar to the data obtaining unit 201 and the text obtaining unit 202 according to Embodiment 1. Thus, description of the data obtaining unit 201 and the text obtaining unit 202 will be omitted.

The arrangement unit 203 according to Embodiment 2 (hereinafter referred to simply as "arrangement unit 203") arranges the first display window at a predetermined position within a virtual space corresponding to the real space. In this case, the display control unit 204 according to Embodiment 2 (hereinafter referred to simply as "display control unit 204") performs display control such that a moving image is displayed in the first display window, while the image processing unit 110 performs a process as below. Specifically, for example, based on the position and orientation of the head-mounted display 100, the display control unit 204 generates a virtual viewpoint image corresponding to how the moving image displayed in the first display window is viewed from the position within the virtual space corresponding to the position of the viewpoint of the user within the real space. Note that the position and orientation of the head-mounted display 100 may be specified based on a signal from the sensor 150.

Also, the arrangement unit 203 arranges the second display window on which to display the specific text at a predetermined position within the virtual viewpoint image generated by the display control unit 204. The display control unit 204 performs display control to display a display image including a representation of the specific text and a representation of the moving image to be displayed within the virtual space on the display unit 120 by performing display control on the specific text such that the specific text is displayed on the second display window arranged at the predetermined position within the virtual viewpoint image by the arrangement unit 203.

The position within the virtual space at which the first display window is arranged by the arrangement unit 203 may be determined in advance or designated by a user operation. For example, in a case where the selected mode is a mode for "cooking," the arrangement unit 203 arranges the first display window at the position within the virtual space corresponding to the position of the far side of the countertop in the depth direction. Arranging the first display window at such a position enables the user to perform the task efficiently or safely without the moving image occluding the representation of what is around the hands. Also, the arrangement unit 203 may determine the position within the virtual space at which to arrange the first display window based on the captured image obtained by image capturing by the image capturing unit 130. Specifically, for example, the arrangement unit 203 specifies the position of a predetermined object included as a representation in the captured image, such as a cutting board, by analyzing the captured image and arranges the first display window at the position within the virtual space corresponding to a predetermined position, such as the far side of the object.

Also, the position within the virtual viewpoint image at which to arrange the second display window may be determined in advance or designated by a user operation. For example, the arrangement unit 203 arranges the second display window at an upper left or upper right portion of the virtual viewpoint image. Also, the arrangement unit 203 may determine the position within the virtual viewpoint image at which to arrange the second display window based on the captured image obtained by image capturing by the image capturing unit 130. For example, the arrangement unit 203 specifies the direction in which the door of a refrigerator included as a representation in the captured image opens or the like by analyzing the captured image, and determines the position within the virtual viewpoint image at which to arrange the second display window based on the result of the specification. Also, based on the display position of the moving image within the virtual viewpoint image generated by the display control unit 204, the arrangement unit 203 may arrange the second display window, for example, at a position at which the displayed moving image and the displayed specific text do not overlap each other.

Note that the image processing unit 110 may accept a user operation for changing the position of at least one of the first display window and the second display window on the state where the moving image and the specific text are displayed. For example, by using the operation unit 140 or inputting a gesture, the user selects the first or second display window whose position is to be changed, and moves the selected display window to a desired position. In a case where the image processing unit 110 accepts this user operation, the arrangement unit 203 moves the selected display window within the virtual space or over the virtual viewpoint image based on the user operation. The display control unit 204 performs display control such that the moving image or the specific text is displayed in the moved display window. A configuration as above enables the user performing a task to maintain a visual field that may improve the work efficiency in a manner suitable for the task.

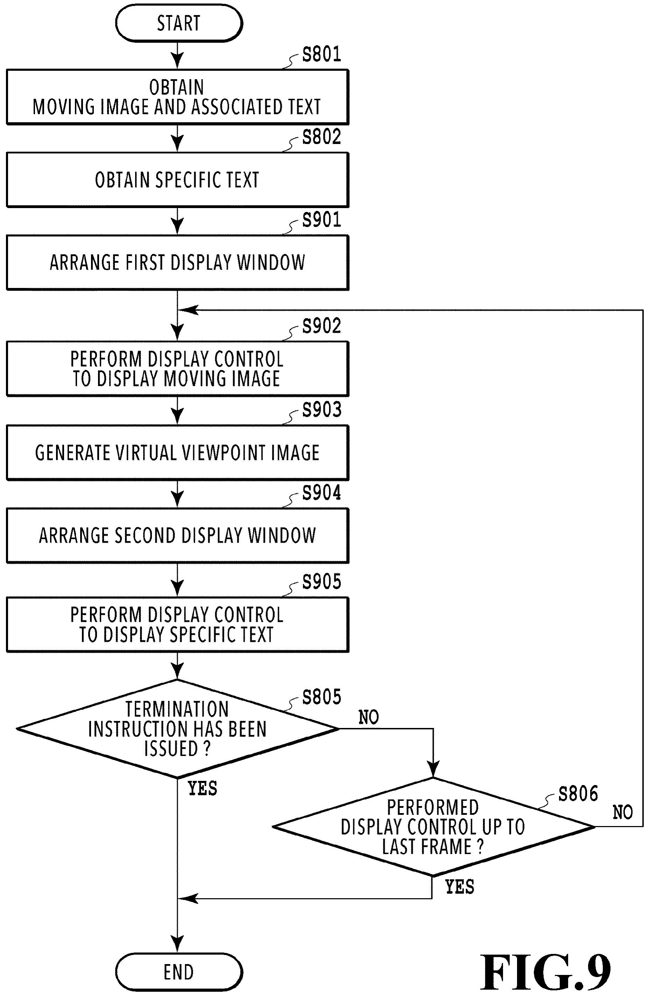

Fig. 9 is a flowchart illustrating an example of a flow of processing by the image processing unit 110 according to Embodiment 2. In the description of the flowchart illustrated in Fig. 9, steps involving the same processes as those in the flowchart illustrated in Fig. 8 are denoted by the same reference signs, and description thereof will be omitted. The processor 111 implements the processing of the flowchart illustrated in Fig. 9 by reading out a program stored in the non-volatile memory 113, the storage medium 114, or the like into the memory 112 and executing it. Note that the flowchart illustrated in Fig. 9 is started, for example, in a case where the user powers on the head-mounted display.

First, the image processing unit 110 executes the processes of S801 and S802. S802 is followed by S901, in which the arrangement unit 203 arranges the first display window on which to play the moving image within a virtual space corresponding to the real space. The method of determining the position within the virtual space at which to arrange the first display window has been described above, and description thereof will therefore be omitted. Next, in S902, the display control unit 204 performs display control such that the moving image obtained in S801 is displayed in the first display window. Next, in S903, based on the position and orientation of the head-mounted display 100, the display control unit 204 generates a virtual viewpoint image corresponding to how the moving image displayed in the first display window is viewed from the position within the virtual space corresponding to the position of the viewpoint of the user within the real space. Next, in S904, the arrangement unit 203 arranges the second display window on which to display the specific text on the virtual viewpoint image generated in S903. The method of determining the position on the virtual viewpoint image at which to arrange the second display window has been described above, and description thereof will therefore be omitted.

Next, in S905, the display control unit 204 performs display control such that the specific text obtained in S802 is displayed in the second display window. As a result, a display image including the moving image displayed in the first display window arranged in the virtual space and a representation of the specific text displayed in the second display window arranged on the virtual viewpoint image is displayed on the display unit 120. After S905, the image processing unit 110 executes the processes of S805 and S806. Note that if it is judged in S806 that display control has not been performed up to the last frame, the image processing unit 110 returns to S902 and repeats the processes from S902 to S806 until the following judgment is made. Specifically, the image processing unit 110 repeats the processes from S902 to S806 until it is judged in S805 that a termination instruction has been issued or until it is judged in S806 that display control has been performed up to the last frame. The process of S904 may be omitted in the repeated processes.

In general, moving images related to tasks such as cooking may be displayed as large as possible within such an extent as not to interfere with the task. Thus, in a case of performing, for example, a task in which the user takes out an ingredient from the refrigerator or the like in the state where the moving image is displayed, the displayed moving image may occlude the user's view and thus lower the work efficiency. On the other hand, in this case, to easily figure out the ingredients needed in the task, such as cooking, it is desirable that specific text being text indicating the ingredients be continuously displayed at such a position that the user may visually recognize them.

On the head-mounted display 100 configured as described above, the first display window on which to display a moving image is fixed at the position within a virtual space corresponding to a position around a predetermined object, such as a cutting board. Thus, in a case of performing, for example, a task in which the user takes out an ingredient from a storage, such as a refrigerator, present far from the object, the specific text is displayed on the display screen, and the moving image stops being displayed on the display screen. This enables the user to check the contents of the specific text while maintaining a good view. Therefore, the head-mounted display 100 according to Embodiment 2 may provide assistance that may improve the user's work efficiency to a greater extent than the head-mounted display 100 according to Embodiment 1.

### [Embodiment 3]

In Embodiment 2, a description has been given of an aspect in which the first display window is arranged at a predetermined position within a virtual space corresponding to the real space. In Embodiment 3, a description will be given of an aspect in which the first display window is arranged at a candidate position selected from among a plurality of candidate positions set in advance with the virtual space corresponding to the real space.

The hardware configuration of the head-mounted display according to Embodiment 3 is the same as the hardware configuration of the head-mounted display 100 according to Embodiment 1 illustrated as an example in Fig. 1. Thus, the following description will be given with the head-mounted display according to Embodiment 3 referred to as "head-mounted display 100." Also, the elements included in the image processing unit 110 according to Embodiment 3 as its logical configuration are similar to the elements included in the image processing unit 110 according to Embodiment 1 as its logical configuration illustrated as an example in Fig. 2 except that an element has different function. Thus, in the following, the names of the elements included in the image processing unit 110 according to Embodiment 3 as its logical configuration are denoted based on the names of the elements included in the image processing unit 110 according to Embodiment 1 as its logical configuration. Specifically, the image processing unit 110 according to Embodiment 3 (hereinafter referred to simply as "image processing unit 110") has a data obtaining unit 201, a text obtaining unit 202, an arrangement unit 203, and a display control unit 204 according to Embodiment 3 as its logical configuration.

The data obtaining unit 201 and the text obtaining unit 202 according to Embodiment 3 (hereinafter referred to simply as "data obtaining unit 201" and "text obtaining unit 202") are similar to the data obtaining unit 201 and the text obtaining unit 202 according to Embodiment 1. Thus, description of the data obtaining unit 201 and the text obtaining unit 202 will be omitted. The display control unit 204 according to Embodiment 3 (hereinafter referred to simply as "display control unit 204") is similar to the display control unit 204 according to Embodiment 2. Thus, description of the display control unit 204 will be omitted.

The arrangement unit 203 according to Embodiment 3 (hereinafter referred to simply as "arrangement unit 203") arranges the first display window at a predetermined position within a virtual space corresponding to the real space, like the arrangement unit 203 according to Embodiment 2. Here, the arrangement unit 203 according to Embodiment 2 determines the position within the virtual space at which to arrange the first display window, for example, based on a captured image obtained by image capturing by the image capturing unit 130. On the other hand, the arrangement unit 203 differs from the arrangement unit 203 according to Embodiment 2 in that the former arranges the first display window at a candidate position selected from among a plurality of candidate positions set in advance within the virtual space. Besides this feature, the processing by the arrangement unit 203 is similar to the processing by the arrangement unit 203 according to Embodiment 2, and description thereof will therefore be omitted.

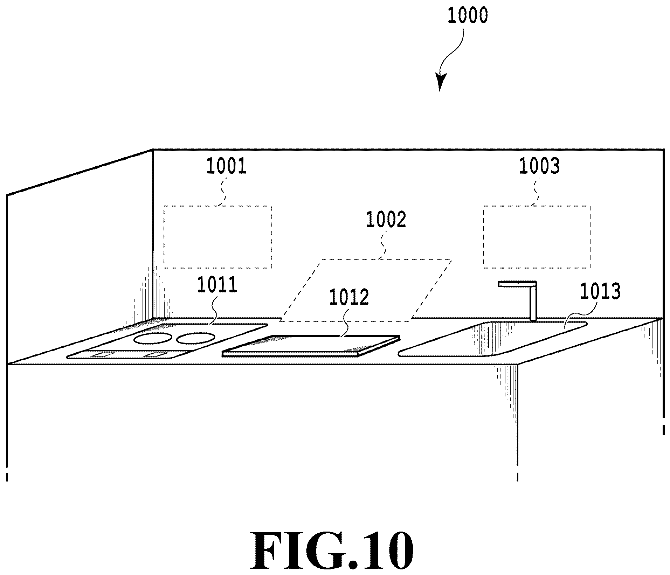

Fig. 10 is a diagram illustrating an example of the arrangement of candidate positions 1001 to 1003 according to Embodiment 3. Fig. 10 illustrates the state of a kitchen 1000 existing in the real space as an example. The kitchen 1000 includes a stove 1011, a cutting board 1012 placed on a countertop, and a sink 1013. Also, Fig. 10 illustrates a plurality of candidate positions 1001 to 1003 arranged within a virtual space corresponding to the real space. Specifically, for example, the candidate position 1001 is arranged around the position of the virtual space corresponding to the position of the stove 1011. Similarly, the candidate position 1002 is arranged around the virtual space corresponding to the position of the cutting board 1012 within the real space, and the candidate position 1003 is arranged around the virtual space corresponding to the position of the sink 1013 within the real space.

In a case where the kitchen 1000 is spacious, the user performs cooking while moving by following each cooking step. For this reason, in a case where the first display window displaying a moving image related to cooking is fixed at a predetermined position within the virtual space, it may be difficult for the user to perform the cooking while viewing the moving image if the user moves. For this reason, the plurality of candidate positions 1001 to 1003 are set in advance, and a candidate position at which to arrange the first display window is determined from among the candidate positions 1001 to 1003, for example, according to the position of the user. Note that the position of the user may be specified, for example, based on the position of the head-mounted display 100 specified based on the signal from the sensor 150.

Specifically, for example, the arrangement unit 203 arranges the first display window at the candidate position situated the closest to the position of the user, i.e., the position of the head-mounted display 100, among the candidate positions 1001 to 1003. Here, the distance between a candidate position and the position of the head-mounted display 100 is the distance between the candidate position within the virtual space and the position within the virtual space corresponding to the position of the head-mounted display 100 within the real space. That is, the arrangement unit 203 changes the candidate position at which to arrange the first display window according to the movement of the user (head-mounted display 100) to move the position of the first display window. Note that the initial positions at which to arrange the plurality of candidate positions 1001 to 1003 may each be determined to be, for example, a position situated away from a predetermined object by a predetermined distance based on object recognition by analysis of the captured image obtained by the image capturing by the image capturing unit 130. These initial positions at which to arrange the candidate positions may be determined by a user operation.

Also, in the above description, the candidate position at which to arrange the first display window is determined according to the position of the user, but the method of determining the candidate position at which to arrange the first display window is not limited to this. For example, the arrangement unit 203 may determine the candidate position at which to arrange the first display window according to the position and orientation of the user, i.e., the position and orientation of the head-mounted display 100. Specifically, for example, based on the position and orientation of the head-mounted display 100, the arrangement unit 203 determines a candidate position present within the display region of the head-mounted display 100 to be the candidate position at which to arrange the first display window. Here, the position and orientation of the head-mounted display 100 may be specified, for example, based on the signal from the sensor 150. Also, for example, by analyzing the frame of the moving image that is being currently played, the arrangement unit 203 may specify the content of the task at the time of this frame and estimate the position of the user for performing the task to determine the candidate position at which to arrange the first display window. Also, for example, the arrangement unit 203 may arrange the first display window at a candidate position selected by the user through a user operation.

Note that the image processing unit 110 may accept a user operation for changing at least one of the plurality of candidate positions in the state where the moving image and the specific text are displayed. For example, by using the operation unit 140 or inputting a gesture, the user selects the candidate position to change, and moves the selected candidate position to a desired position. In a case where the image processing unit 110 accepts this user operation, the arrangement unit 203 moves the selected candidate position within the virtual space based on the user operation.

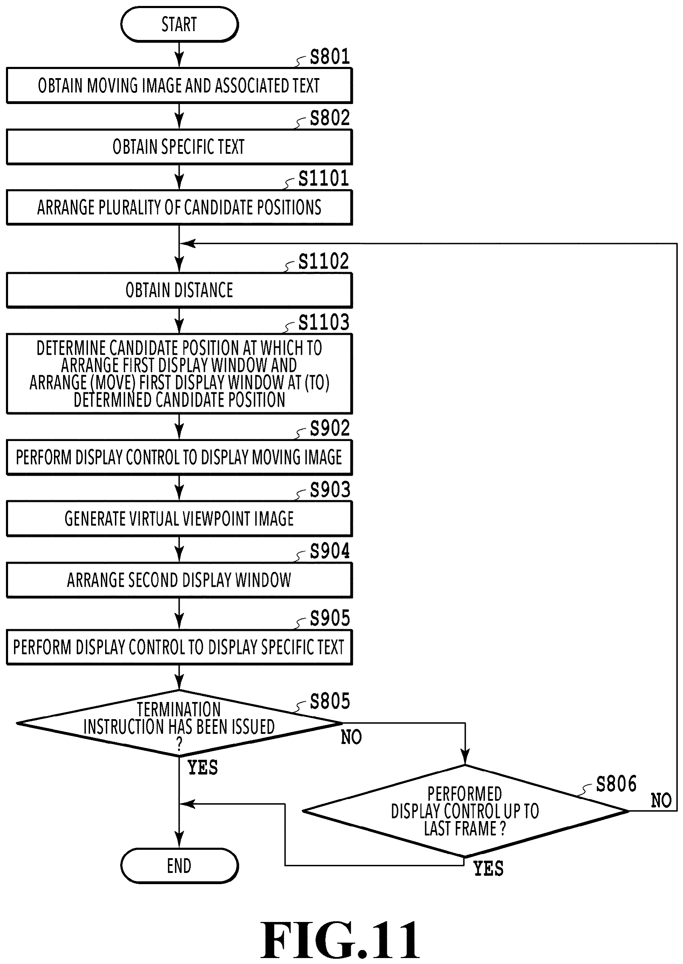

Fig. 11 is a flowchart illustrating an example of a flow of processing by the image processing unit 110 according to Embodiment 3. In the description of the flowchart illustrated in Fig. 11, steps involving the same processes as those in the flowchart illustrated in Fig. 8 or 9 are denoted by the same reference signs, and description thereof will be omitted. The processor 111 implements the processing of the flowchart illustrated in Fig. 11 by reading out a program stored in the non-volatile memory 113, the storage medium 114, or the like into the memory 112 and executing it. Note that the flowchart illustrated in Fig. 11 is started, for example, in a case where the user powers on the head-mounted display.

First, the image processing unit 110 executes the processes of S801 and S802. S802 is followed by S1101, in which the arrangement unit 203 arranges a plurality of candidate positions within a virtual space corresponding to the real space, for example, based on the captured image obtained by the image capturing by the image capturing unit 130. Next, in S1102, the arrangement unit 203 obtains the distance between each candidate position arranged in S1101 and the head-mounted display 100. Next, in S1103, the arrangement unit 203, for example, determines the candidate position at which to arrange the first display window based on the distance between each candidate position and the head-mounted display 100 obtained in S1102, and arranges (moves) the first display window at (to) this candidate position. After S1103, the image processing unit 110 executes the processes of S902 to S905. After S905, the image processing unit 110 executes the processes of S805 and S806.

Note that if it is judged in S806 that display control has not been performed up to the last frame, the image processing unit 110 returns to S1002 and repeats the processes from S1102 to S806 until the following judgment is made. Specifically, the image processing unit 110 repeats the processes from S1102 to S806 until it is judged in S805 that a termination instruction has been issued or until it is judged in S806 that display control has been performed up to the last frame. The process of S904 may be omitted in the repeated processes.

The head-mounted display 100 configured as described above selects and determines a candidate position at which to arrange the first display window displaying a moving image from among a plurality of candidate positions arranged in advance within a virtual space based on the position of the user or the like. Thus, even in a case where, for example, the user moves for a task, the moving image may be displayed at a position at which it is easily visually recognizable to the user. Therefore, the head-mounted display 100 according to Embodiment 3 may provide assistance that may improve the user's work efficiency to a greater extent than the head-mounted display 100 according to Embodiment 2.

Note that in the above description, the arrangement unit 203 selects one candidate position at which to arrange the first display window displaying a moving image from among a plurality of candidate positions, but the operation is not limited to this. For example, the arrangement unit 203 may select two or more candidate positions from among the plurality of candidate positions and arrange the first display window at each of the selected two or more candidate positions. In this case, the arrangement unit 203, for example, selects the closest candidate position to the position of the user and the second closest candidate position and arranges the first display window at each of the selected two candidate positions.

### [Other Embodiments]

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present disclosure has been described with reference to embodiments, it is to be understood that the present disclosure is not limited to the disclosed embodiments. The scope of the following claims is to be accorded the broadest interpretation so as to encompass all such modifications and equivalent structures and functions.

Various embodiments have been described in detail above but it will be understood that the present disclosure is not limited to these embodiments and encompasses all modifications, variants, alternatives and equivalents falling within the scope of the appended claims.

## Claims

1. An image processing apparatus (110) for performing display control on a display unit (120) included in a wearable device (100), the image processing apparatus (110) comprising:
an obtaining unit (202) configured to obtain specific text from text associated with a moving image; and
a display control unit (204) configured to display the specific text and the moving image on different display windows (710, 720).

2. The image processing apparatus (110) according to claim 1, wherein the obtaining unit (202) obtains the specific text based on a mode (501) selected by a user from among a plurality of modes.

3. The image processing apparatus (110) according to claim 2, wherein the obtaining unit (202) obtains text indicating at least one of a material, a tool, and a process corresponding to the selected mode (501) as the specific text based on the selected mode.

4. The image processing apparatus (110) according to claim 3, wherein in a case where the selected mode (501) is a mode for cooking, the obtaining unit (202) obtains text indicating at least one of an ingredient to be used in cooking and a process for the cooking as the specific text.

5. The image processing apparatus (110) according to any one of claims 1 to 4, further comprising an arrangement unit (203) configured to arrange the display window (710) on which to display the moving image within a virtual space corresponding to a real space.

6. The image processing apparatus (110) according to claim 5, wherein the arrangement unit (203) arranges the display window (710) on which to display the moving image at a candidate position specified from among a plurality of candidate positions (1001, 1002, 1003) provided within the virtual space.

7. The image processing apparatus (110) according to claim 6, wherein the arrangement unit (203) specifies the candidate position at which to arrange the display window (710) on which to display the moving image based on a distance between a position within the virtual space corresponding to a position of a user and each of the plurality of candidate positions (1001, 1002, 1003).

8. The image processing apparatus (110) according to any one of claims 5 to 7, wherein the display window (720) on which to display the specific text is arranged on a virtual viewpoint image obtained by rendering the virtual space.

9. The image processing apparatus (110) according to any one of claims 1 to 8, wherein a position of the display window (720) on which to display the specific text does not change depending on a position and orientation of a user.

10. An image processing method for performing display control on a display unit (120) included in a wearable device (100), the image processing method comprising the steps of:
obtaining (S802) specific text from text associated with a moving image; and
displaying (S804) the specific text and the moving image on different display windows.

11. A program for causing a computer to function as the image processing apparatus according to any one of claims 1 to 9.
